# EUROPÄISCHE PATENTANMELDUNG

(11) **EP 2 839 886 A1**
(43) Veröffentlichungstag der Anmeldung: **25.02.2015**
(21) Anmeldenummer: 14002364.9
(22) Anmeldetag: 09.07.2014
(51) Int. Cl.: B05D 7/14, B05D 1/02, B05D 1/18, B05D 3/00, B05B 13/04

(54) **Verfahren und Anlage zur Oberflächenbehandlung von Fahrzeugkarosserien**

(30) Priorität: 26.07.2013 DE 102013012485
(71) Anmelder: Eisenmann AG, 71032 Böblingen (DE)
(72) Erfinder: Schulze, Herbert, 71134 Aidlingen (DE)
(74) Vertreter: Heinrich, Hanjo

(57) **Zusammenfassung**

Es ein Verfahren zur Oberflächenbehandlung von Fahrzeugkarosserien (10) angegeben, welche wenigstens einen ersten Materialbezirk (12), in dem die Fahrzeugkarosserien (10) aus Bauteilen aus einem ersten Material aufgebaut sind, und einen zweiten Materialbezirk (16) definieren, in dem die Fahrzeugkarosserien (10) aus Bauteilen aus einem zweiten Material aufgebaut sind. Der erste Materialbezirk (12) der Fahrzeugkarosserien (10) wird in einer ersten Behandlungszone auf eine erste Art und der zweite Materialbezirk (16) der Fahrzeugkarosserien (10) wird in einer zweiten Behandlungszone auf eine zweite Art behandelt. Außerdem ist eine Anlage zur Oberflächenbehandlung solcher Fahrzeugkarosserien (10) angegeben. Dort sind erste Mittel (62) vorhanden, durch welche der erste Materialbezirk (12) der Fahrzeugkarosserien (10) in einer ersten Behandlungszone auf eine erste Art behandelbar ist. Auch sind zweite Mittel (62) vorhanden, durch welche der zweite Materialbezirk (16) der Fahrzeugkarosserien (10) in einer zweiten Behandlungszone auf eine zweite Art behandelbar ist.

## Beschreibung

Die Erfindung betrifft ein Verfahren und eine Anlage zur Oberflächenbehandlung von Fahrzeugkarosserien, welche wenigstens einen ersten Materialbezirk, in dem die Fahrzeugkarosserien aus Bauteilen aus einem ersten Material aufgebaut sind, und einen zweiten Materialbezirk definieren, in dem die Fahrzeugkarosserien aus Bauteilen aus einem zweiten Material aufgebaut sind.

Fahrzeugkarosserien sind in den meisten Fällen und insbesondere in der Massenproduktion vollständig aus Stahl gefertigt. Stahl bietet die geforderten Eigenschaften mit der notwendigen Strukturstabilität und kann mit etablierten Techniken bearbeitet werden.

Fahrzeugkarosserien aus Stahl werden sowohl beim eigentlichen Lackierprozess, bei dem sie mit einem Primer, einem Basislack und einem Decklack versehen werden, als auch bei einer Vorbehandlung, bei der sie gereinigt und entfettet werden, einheitlich behandelt. Bei der Vorbehandlung kann zudem auch durch eine Phosphatierung ein Haftgrund und ein Korrosionsschutz auf die Fahrzeugkarosserien aufgebracht werden. Besonders der Korrosionsschutz ist bei Bauteilen aus Stahl wichtig.

Insbesondere die Vorbehandlungen werden in der Regel auf die gleiche Art als Tauchbehandlungen durchgeführt, bei denen die Fahrzeugkarosserien durch ein oder mehrere Tauchbecken geführt und dabei vollständig in eine Behandlungsflüssigkeit eingetaucht werden. Nur so können vorhandene Hohlräume und Hinterschneidungen, wie sie üblicherweise bei einer Fahrzeugkarosserie vorkommen, zuverlässig von den Behandlungsflüssigkeiten erreicht werden.

Es sind in speziellen Fällen auch Fahrzeugkarosserien bekannt, die aus nichtmetallischen Werkstoffen, wie beispielsweise Kunststoffen, Karbonfasermaterialien oder Verbundwerkstoffen, gefertigt sind. Solche nichtmetallischen Werkstoffe benötigen zwar keinen Korrosionsschutz und sind leichter als Stahl, haben jedoch nicht immer die erforderlichen Eigenschaften. Insbesondere, wenn die Strukturstabilität von Stahl mit nichtmetallischen Werkstoffen erreicht werden muss, führt dies zu hohen Kosten, die für eine Massenproduktion häufig nicht mehr akzeptabel sind.

Im Automobilbau etabliert es sich nun zunehmend, bei der Herstellung von Fahrzeugkarosserien nicht mehr nur StahlBauteilen zu verwenden, sondern Bauteile aus Stahl mit Bauteilen aus anderen Materialien, insbesondere aus Kunststoffen, zu kombinieren, um den Anforderungen an eine Ressourcen schonende Fertigung gerecht zu werden. Zugleich kann mit modernen Materialien, wie beispielsweise Karbonfasermaterialien oder Verbundwerkstoffen, bei bestimmten Bereichen der Fahrzeugkarosserie ein ausreichend hohe Stabilität und Steifheit bei geringer Materialstärke erreicht werden.

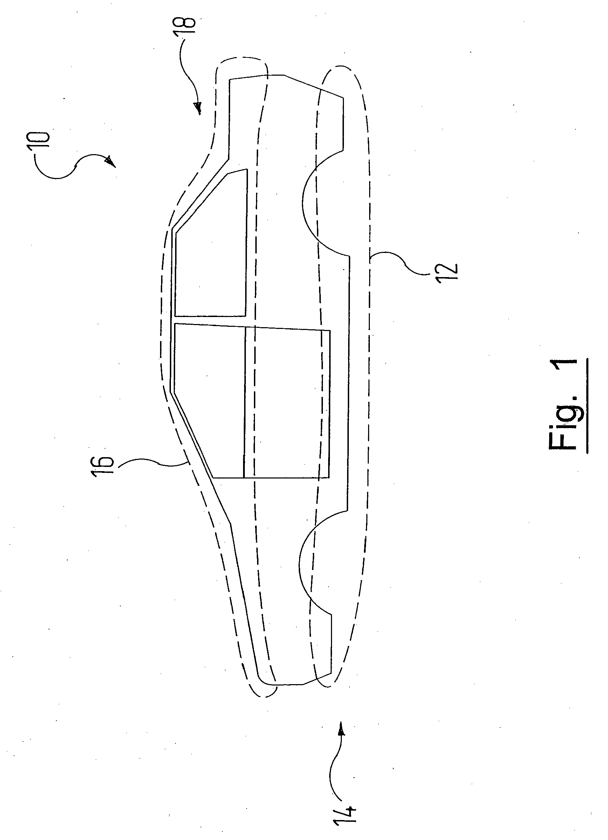

Solche aus Bauteilen aus verschiedenen Materialien aufgebauten Fahrzeugkarosserien definieren verschiedene Bezirke, in denen die Fahrzeugkarosserien aus Bauteilen aus unterschiedlichen Materialien aufgebaut sind, was in Figur 1 stark schematisch veranschaulicht ist. Dort ist eine Fahrzeugkarosserie 10 gezeigt, bei der beispielhaft ein erster Materialbezirk 12 in einem Bodenbereich 14 und ein zweiter Materialbezirk 16 in einem Dachbereich 18 veranschaulicht ist, der sich entlang der Dachlinie auch über die Front- und Heckbereiche der Fahrzeugkarosserie 10 erstreckt.

Die Bauteile im ersten Materialbezirk 12 im Bodenbereich 14 sind in der Regel aus Stahl, da die dortigen Bauteile die von Stahl bekannten hohe Materialfestigkeiten und Strukturstabilitäten gewährleisten müssen. Zudem sind im Bodenbereich 14 die massereichsten Bauteile vorhanden. Im Dachbereich 18 ist die Fahrzeugkarosserie 10 dagegen aus Bauteilen aufgebaut, die aus nichtmetallischen Materialien gefertigt sind.

Die verschiedenen Materialien haben jedoch auch unterschiedliche Anforderungen an die Behandlung, sei es im Lackierprozess oder bei der zeitlich vorausgehenden Vorbehandlung. Im Hinblick auf die Vorbehandlung benötigen Kunststoffteile beispielsweise keinen derart ausgeprägten Korrosionsschutz, wie er für Stahlbauteile unerlässlich ist. Bei einem Tauchverfahren werden jedoch auch stets solche Bauteile einer Fahrzeugkarosserie mitbehandelt, welche diese Art der Vorbehandlung nicht benötigen.

Aber auch bei allen anderen bei der Oberflächenbehandlung von Fahrzeugkarosserien erforderlichen Behandlungsschritte kann es für Bauteile aus unterschiedlichen Materialien ganz verschiedene Anforderungen bezogen auf die Abfolge und die Art von einzelnen Behandlungsschritten geben.

Die Aufgabe der Erfindung besteht darin, ein Verfahren und eine Anlage der eingangs genannten Art zu schaffen, welche eine effiziente und Ressourcen schonende Behandlung von Fahrzeugkarosserien ermöglichen, die aus Bauteilen aus unterschiedlichen Materialien aufgebaut sind.

Diese Aufgabe wird bei einem Verfahren der eingangs genannten Art dadurch gelöst, dass der erste Materialbezirk der Fahrzeugkarosserien in einer ersten Behandlungszone auf eine erste Art und der zweite Materialbezirk der Fahrzeugkarosserien in einer zweiten Behandlungszone auf eine zweite Art behandelt wird.

Erfindungsgemäß wurde erkannt, dass verschiedene Behandlungsschritte für Bauteile aus unterschiedlichen Materialien, die in verschiedenen Materialbezirken einer Fahrzeugkarosserie vorhanden sind, voneinander entkoppelt werden und auf unterschiedliche Art und Weise durchgeführt werden kann.

Dabei ist es besonders günstig, wenn bei der Behandlung der ersten Art eine Tauchbehandlung durchgeführt wird. Die Tauchbehandlung ist insbesondere für Bauteile aus Stahl die effektivste Variante. Im Vergleich zu bekannten Tauchverfahren können die Tauchbecken jedoch weniger tief sein, da gegebenenfalls nicht mehr die gesamte Fahrzeugkarosserie vollständig in das Behandlungsmedium eingetaucht werden muss. Somit ist auch der Bedarf an Behandlungsmedium für die Tauchbehandlung geringer.

Für Bauteile aus anderen Materialien als Stahl ist es vorteilhaft, wenn bei der Behandlung der zweiten Art eine Spritzbehandlung durchgeführt wird. Unter einer Spritzbehandlung ist vorliegend jede Art der Behandlung zu verstehen, bei der ein flüssiges Medium mit einer Applikationseinrichtung auf eine Oberfläche abgegeben wird.

Vorzugsweise werden die Fahrzeugkarosserien auf ein und demselben Fördersystem sowohl durch die erste Behandlungszone als auch durch die zweite Behandlungszone gefördert. Dies bedeutet, dass die Fahrzeugkarosserien ohne Wechsel einer Fördereinheit beide Behandlungsarten durchlaufen können.

Weiter vorteilhaft kann das Verfahren angewendet werden, wenn die Behandlungen der ersten Art und der zweiten Art Vorbehandlungen sind, welche die Fahrzeugkarosserien insbesondere vor einem Lackierprozess durchlaufen. Besonders bei solchen Vorbehandlungen müssen für Bauteile aus unterschiedlichen Materialen ganz verschiedene Anforderungen erfüllt werden und es kann vorkommen, dass die Bauteile einer ersten Art eine Behandlung überhaupt nicht benötigen, die für die Bauteile der zweiten unabdingbar ist.

Die oben angegebene Aufgabe wird bei einer Anlage der eingangs genannten Art dadurch gelöst, dass
a) erste Mittel vorhanden sind, durch welche der erste Materialbezirk der Fahrzeugkarosserien in einer ersten Behandlungszone auf eine erste Art behandelbar ist;
b) zweite Mittel vorhanden sind, durch welche der zweite Materialbezirk der Fahrzeugkarosserien in einer zweiten Behandlungszone auf eine zweite Art behandelbar ist.

Die Vorteile entsprechen den oben zum Verfahren erläuterten Vorteilen.

Es ist folglich besonders günstig, wenn in der ersten Behandlungszone ein Tauchbecken angeordnet ist, welches mit einem Behandlungsmedium gefüllt ist, und die Behandlung der ersten Art eine Tauchbehandlung ist.

Für Bauteile aus anderen Materialien als Stahl ist es dementsprechend vorteilhaft, wenn in der zweiten Behandlungszone wenigstens eine Applikationseinrichtung angeordnet ist, mittels welcher ein Behandlungsmedium auf die Fahrzeugkarosserie abgebbar ist, und die Behandlung der zweiten Art eine Spritzbehandlung ist. Vorzugsweise ist die Applikationseinrichtung ein mehrachsiger Roboter, insbesondere ein Gelenkarmroboter, der einen Applikator führt, wie es an und für sich bekannt ist. Durch die hohe Beweglichkeit eines solchen Roboters können auch abgedeckte oder sonst schwer erreichbare Bauteile und Oberflächenbereiche der Fahrzeugkarosserie zuverlässig mit Behandlungsmedium beaufschlagt werden.

Entsprechend den obigen Ausführungen ist es besonders vorteilhaft, wenn die Fahrzeugkarosserien mit einem Fördersystem sowohl durch die erste Behandlungszone als auch durch die zweite Behandlungszone förderbar sind.

Mit Blick auf das Fördersystem ist es günstig, wenn dieses eine Vielzahl von Transportwagen mit einer Befestigungseinrichtung umfasst, an welcher eine Fahrzeugkarosserie befestigbar ist.

Um die Fahrzeugkarosserien in ein Tauchbecken hinein und wieder aus diesem heraus bewegen zu können, ist es von Vorteil, wenn die Transportwagen eine Hub-/Senkeinrichtung umfassen, durch welche die Befestigungseinrichtung in vertikaler Richtung anhebbar oder absenkbar ist.

Ein vorteilhaftes Fördersystem ist ein Hängebahnsystem, bei dem die Transportwagen auf einer Tragschiene verfahrbar sind.

Dort ist es besonders Raum sparend, wenn die Hub-/Senkeinrichtung als Teleskopeinrichtung ausgebildet ist.

Alternativ kann das Fördersystem ein Bodenbahnsystem sein, bei welchem die Transportwagen als Förderwagenpaar mit zwei Förderwagen, die auf einem Boden verfahrbar sind, oder als Tragwagenpaar mit zwei Tragwagen , welche auf einer Bodenschiene verfahrbar sind, ausgebildet sind, die eine Tragstruktur mit der Befestigungseinrichtung zischen sich aufspannen. Durch ein jeweiliges Wagenpaar ist eine gute Seitenstabilität beim Fördern der Fahrzeugkarosserien gegeben.

Dabei kann die Hub-/Senkeinrichtung vorteilhaft als Teleskopeinrichtung oder als Schwenkeinrichtung ausgebildet sein.

Weiter alternativ kann das Fördersystem ein Kettenfördersystem mit wenigstens einer Förderkette sein, welche die Transportwagen mit sich führt. Ein derartiges Fördersystem ohne selbst fahrende Transportwagen kann steuerungstechnisch von Vorteil sein.

Die Hub-/Senkeinrichtung kann dort in baulich wenig aufwendiger Weise durch wenigstens ein Führungsprofil ausgebildet sein, welches die Förderkette führt und auf unterschiedlichen Höhenniveaus verläuft.

Wie es den obigen Erläuterungen zum Verfahren entspricht, sind die erste Behandlungszone und die zweite Behandlungszone bevorzugt jeweils Vorbehandlungszonen, in denen die Fahrzeugkarosserien insbesondere vor einem Lackierprozess vorbehandelbar sind.

Nachfolgend werden nun Ausführungsbeispiele der Erfindung anhand der Zeichnungen näher erläutert. In diesen zeigen:
- Figur 1: eine Fahrzeugkarosserie, bei der zwei Materialbezirke veranschaulicht sind;
- Figur 2: eine Seitenansicht einer Vorbehandlungslinie einer Oberflächenbehandlungsanlage mit einer Tauchzone und einer Spritzzone, die in Förderrichtung hintereinander angeordnet sind und durch die Fahrzeugkarosserien mit Hilfe eines Fördersystems gemäß einem ersten Ausführungsbeispiel hindurch gefördert werden;
- Figur 3: eine Frontansicht auf die Tauchzone der Vorbehandlungslinie von Figur 2 an der dortigen Schnittlinie III-III;
- Figur 4: eine Frontansicht auf die Spritzzone der Vorbehandlungslinie von Figur 2 an der dortigen Schnittlinie IV-IV;
- Figur 5: eine Seitenansicht einer abgewandelten Vorbehandlungslinie mit einem Fördersystem gemäß einem zweiten Ausführungsbeispiel;
- Figur 6: eine Frontansicht auf die Tauchzone der Vorbehandlungslinie von Figur 5 an der dortigen Schnittlinie VI-VI;
- Figur 7: eine Frontansicht auf die Spritzzone der Vorbehandlungslinie von Figur 6 an der dortigen Schnittlinie VII-VII;
- Figur 8: eine Seitenansicht einer nochmals abgewandelten Vorbehandlungslinie, bei welcher die Tauchzone und die Spritzzone überlappen, wobei ein Fördersystem gemäß einem dritten Ausführungsbeispiel vorhanden ist;
- Figur 9: eine Frontansicht auf die Vorbehandlungslinie von Figur 8 an der dortigen Schnittlinie IX-IX;
- Figur 10: eine Frontansicht auf die Vorbehandlungslinie von Figur 8 an der dortigen Schnittlinie X-X;
- Figur 11: eine Seitenansicht einer abermals abgewandelten Vorbehandlungslinie, bei welcher die Tauchzone und die Spritzzone überlappen, wobei ein Fördersystem gemäß einem vierten Ausführungsbeispiel vorhanden ist;
- Figur 12: nochmals eine Seitenansicht einer Vorbehandlungslinie, bei der die Tauchzone und die Spritzzone in Förderrichtung hintereinander angeordnet sind, wobei ein Fördersystem gemäß einem fünften Ausführungsbeispiel vorhanden ist.

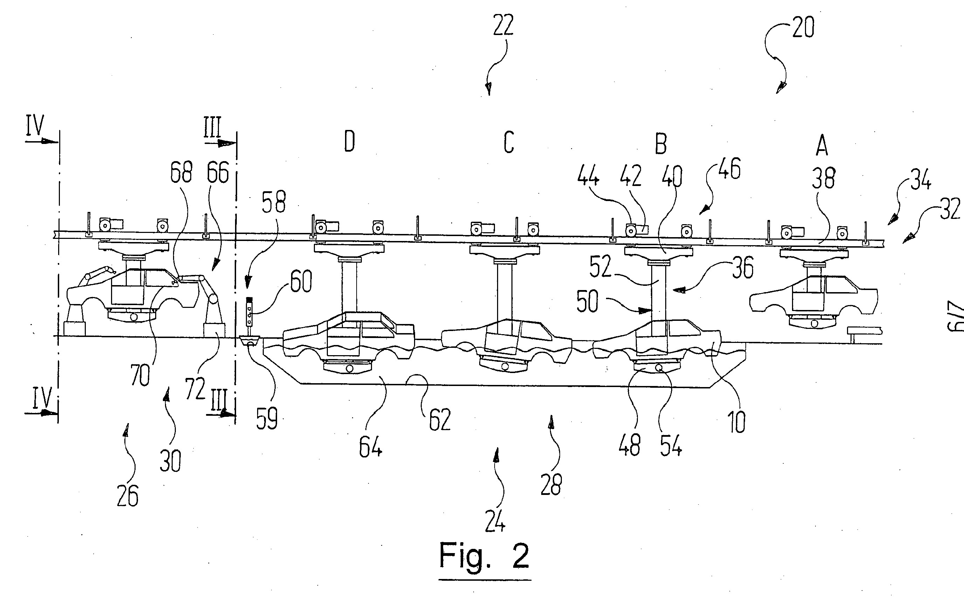

In Figur 2 ist mit 20 eine Oberflächenbehandlungsanlage bezeichnet, in der Fahrzeugkarosserien 10 mit verschiedenen Materialbezirken 12, 16 behandelt werden. Nachfolgend wird das erfindungsgemäße Konzept am Beispiel einer Vorbehandlungslinie 22 erläutert. In dieser werden die Fahrzeugkarosserien 10 einer Vorbehandlung unterzogen, bevor sie in einer Lackierstraße in an und für sich bekannter Art und Weise mit einem aus mehreren Schichten aufgebauten Lack versehen werden.

Die Vorbehandlungslinie umfasst wenigstens eine erste und eine zweite Behandlungszone, wobei in Figur 2 eine erste Vorbehandlungszone 24 und eine zweite Vorbehandlungszone 26 gezeigt sind. Wie bereits angesprochen, kann das erfindungsgemäße Konzept in allen Behandlungszonen verwendet werden, auch in solchen, in denen keine Vorbehandlung durchgeführt wird.

In der ersten Vorbehandlungszone 24 können die Fahrzeugkarosserien 10 auf eine erste Art vorbehandelt werden und beim vorliegenden Ausführungsbeispiel auf eine erste Applikationsart mit einem Behandlungsmedium beaufschlagt werden. In der zweiten Vorbehandlungszone 26 können die Fahrzeugkarosserien 10 auf eine zweite Art vorbehandelt werden, die von der ersten Art verschieden ist; beim vorliegenden Ausführungsbeispiel können die Fahrzeugkarosserien 10 dort auf eine zweite Applikationsart mit einem Behandlungsmedium beaufschlagt werden, welche von der ersten Applikationsart verschieden ist. Die jeweils in der ersten und zweiten Vorbehandlungszone 24, 26 verwendeten Behandlungsmedien können unterschiedlich oder gleich sein.

In der Praxis ist beispielsweise die erste Vorbehandlungszone 24 eine Tauchzone 28 und die zweite Vorbehandlungszone 26 eine Spritzzone 30, wie es in Figur 2 gezeigt ist. In der Vorbehandlungslinie 22 ist ein Fördersystem 32 angeordnet, mit dem die Fahrzeugkarosserien 10 sowohl durch die erste Vorbehandlungszone 24 als auch durch die zweite Vorbehandlungszone 26 gefördert werden. Anders ausgedrückt, werden die Fahrzeugkarosserien 10 somit mit ein und demselben Fördersystem 32 sowohl durch die erste Vorbehandlungszone 24 als auch durch die zweite Vorbehandlungszone 26 gefördert.

In Figur 2 ist als erstes Ausführungsbeispiel eines Fördersystems 32 ein Hängebahnsystem 34 gezeigt. Dieses umfasst mehrere selbst fahrende Transportwagen 36, die auf einer Tragschiene 38 verfahren werden. Hierzu umfasst jeder Transportwagen 36 ein Fahrwerk 40, welches einen Antriebsmotor 42 mit sich führt, der eine am Fahrwerk 40 gelagerte Antriebsrolle 44 antreibt, die auf der Tragschiene 38 abrollt. Das Fahrwerk 40 lagert außerdem eine Rollenanordnung 46 mit nicht eigens gezeigten Führungs- und Stützrollen, die auf und an der Tragschiene 38 abrollen und ein Verkippen des Transportwagens 36 gegenüber der Horizontalen oder Vertikalen verhindern.

Der Transportwagen 36 umfasst außerdem eine Befestigungseinrichtung 48, an welcher eine Fahrzeugkarosserie 10 befestigt werden kann. Die Befestigungseinrichtung 48 kann in vertikaler Richtung angehoben oder abgesenkt werden, wozu sie über eine Hub-/Senkeinrichtung 50 mit dem Fahrwerk 40 des Transportwagens 36 gekoppelt ist. Die Hub-/Senkeinrichtung 50 ist beim vorliegenden Ausführungsbeispiel als Teleskopeinrichtung 52 ausgebildet.

Die Befestigungseinrichtung 48 kann außerdem um eine Schwenkachse 54, die quer zur Förderrichtung verläuft, verschwenkt werden. Diese Schwenkachse 54 ist in einer Grundstellung der Befestigungseinrichtung 48 horizontal ausgerichtet. Die Befestigungseinrichtung 48 kann zusätzlich um eine horizontale Kippachse 56 in eine Kippstellung verkippt werden, die parallel zur Förderrichtung verläuft, wobei die Schwenkachse 54 der Kippbewegung der Befestigungseinrichtung 48 folgt. Die Schwenkachse 54 und die Kippachse 56 stehen stets senkrecht aufeinander.

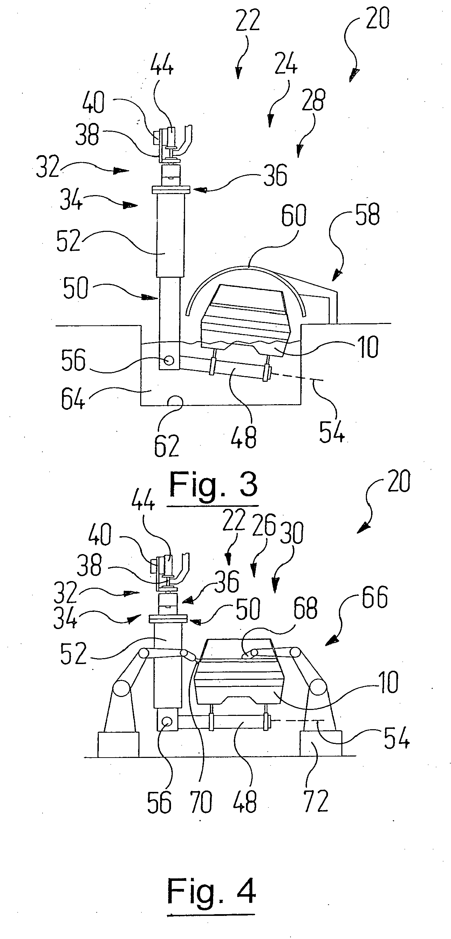

Die Kippstellung der Befestigungseinrichtung 48 ist in Figur 3 zu erkennen. Dort ist auch ein ebenfalls in Figur 2 veranschaulichtes Behandlungsportal 58 mit einer die Fahrzeugkarosserie 10 überdeckenden Behandlungskuppel 60 gezeigt, unter welcher eine Fahrzeugkarosserie 10 hindurch gefördert werden kann. Das Behandlungsportal 58 kann beispielsweise als Sprüheinrichtung ausgebildet sein, bei der von der Behandlungskuppel 60 mit Hilfe von Applikatoren zum Beispiel ein Spülmittel auf die Fahrzeugkarosserie 10 abgegeben werden kann. Wenn eine Behandlungsflüssigkeit von dem Behandlungsportal 58 abgegeben wird, ist unter dem Behandlungsportal 58 ein Auffangbecken 59 angeordnet, in welches die Behandlungsflüssigkeit von der Fahrzeugkarosserie 10 abfließen oder abtropfen kann. Das Behandlungsportal 58 kann auch zum Bestrahlen der Fahrzeugkarosserie 10 mit elektromagnetischer Strahlung vorgesehen sein, wobei die Behandlungskuppel 60 entsprechende Strahlungsquellen umfasst. Ein Auffangbecken 59 ist dann nicht notwendig.

In der Kippstellung der Befestigungseinrichtung 48 kann sich die Fahrzeugkarosserie 10 der Behandlungskuppel 60 entgegen neigen, wozu diese ihrerseits geneigt ist, wie es in Figur 3 zu erkennen ist.

Für den Betrieb der Transportwagen 36 zusätzlich zum Antriebsmotor 42 erforderliche Antriebsmittel und Steuereinheiten sind der Übersichtlichkeit halber nicht eigens gezeigt.

In der Tauchzone 28 ist als Mittel für eine Behandlung des ersten Materialbezirks 12 der Fahrzeugkarosserien 10 auf eine erste Art ein Tauchbecken 62 angeordnet, dass mit einem flüssigen Behandlungsmedium 64 gefüllt ist. Das Behandlungsmedium 64 kann beispielsweise ein flüssiges Phosphatiermedium sein, durch welches der erste Materialbezirk 12 der Fahrzeugkarosserien 10 mit den Stahlbauteilen geführt werden müssen, um einen Korrosionsschutz zu aufzubauen.

In Figur 2 sind verschiedene Phasen A, B, C, D der Tauchbehandlung veranschaulicht. In der Phase A führt das Fördersystem 32 die Fahrzeugkarosserien 10 an das Tauchbecken 62 heran, welche dann in der Phase B so in das Tauchbecken 62 abgesenkt wird, dass diese bereichsweise in das Behandlungsmedium 64 eintaucht und deren erster Materialbezirk 12 von dem Behandlungsmedium 64 benetzt wird. In der Phase C wird die Fahrzeugkarosserie 10 derart bereichsweise eingetaucht durch das Tauchbecken 62 geführt. In der Phase D wird die Fahrzeugkarosserie 10 dann aus dem Tauchbecken 62 herausbewegt und hiernach in die Spritzzone 30 gefördert. Dabei wird die Fahrzeugkarosserie 10 durch das Behandlungsportal 58 geführt, wenn dieses vorhanden ist.

Beim Durchlaufen der Phasen A, B, C, D bewegt sich der Transportwagen 36 kontinuierlich. Zusätzlich kann die Fahrzeugkarosserie 10 verschwenkt und verkippt werden, indem die Befestigungseinrichtung 48 um deren Schwenkachse 54 und/oder um deren Kippachse 57 verkippt wird. So kann die Fahrzeugkarosserie 10, die mit ihrem Bodenbereich 14 in das Tauchbecken 62 eintaucht, beispielsweise eine Art Wellenbewegung ausführen, was in Figur 2 durch die Phasen B und C angedeutet ist.

Alternativ können die Fahrzeugkarosserien 10 auch intermittierend durch die erste Vorbehandlungszone 24 gefördert werden.

Die Fahrzeugkarosserie 10 kann insgesamt einen Bewegungsablauf ausführen, der eine Überlagerung einer horizontalen Linearbewegung, einer vertikalen Linearbewegung, einer Rotation um die Schwenkachse 54 und einer Verkippung um die Kippachse 56 ist. Alle diese Bewegungen können unabhängig von den anderen Bewegungen und somit auch alleine ausgeführt werden, ebenso ist eine Überlagerung von nur zwei oder drei dieser Bewegungen möglich.

In Förderrichtung hinter dem Behandlungsportal 58 wird die Fahrzeugkarosserie 10 wieder aus dem Tauchbecken 62 herausgeführt und gelangt in die Spritzzone 30. Dort sind als Mittel für eine Behandlung des zweiten Materialbezirks 16 der Fahrzeugkarosserien 10 auf eine zweite Art mehrere Applikationseinrichtungen 66 mit Applikatoren 68 für ein Behandlungsmedium 70 angeordnet, das für die Bauteile im zweiten Materialbezirk 16 gedacht ist.

Beim vorliegenden Ausführungsbeispiel sind hierzu Gelenkarmroboter 72 vorhanden, wie sie an und für sich bekannt sind und die jeweils an ihrem distalen Ende einen Applikator 68 führen. Als Applikatoren 68 kommen alle bekannten Applikatoren in Frage, beispielsweise Spritzpistolen oder Zerstäuber oder dergleichen.

Bei einer nicht eigens gezeigten Alternative kann die Spritzzone 30 in Förderrichtung auch vor der Tauchzone 28 angeordnet sein, so dass in der Abfolge erst eine Spritz- und dann eine Tauchbehandlung durchgeführt wird.

Es versteht sich, dass auch diejenigen Bauteile der Fahrzeugkarosserien 10 einer Vorbehandlung unterzogen werden, die nicht in den beiden veranschaulichten Materialbezirken 12 und 16 angeordnet sind. Hierfür gibt es beispielsweise eine oder auch mehrere weitere Vorbehandlungszonen, in welcher diese Bauteile mit einem jeweils für sie geeigneten Behandlungsmedium behandelt werden können.

Das Tauchbecken 62 ist beim vorliegenden Ausführungsbeispiel nur so tief ausgebildet, dass die Fahrzeugkarosserie 10 bereichsweise und mit ihrem ersten Materialbezirk 12 in das Tauchbecken 62 bzw. das darin befindliche Behandlungsmedium 64 eintaucht.

Bei einer nicht eigens gezeigten Abwandlung kann das Tauchbecken 62 jedoch auch so tief ausgebildet sein, dass eine Fahrzeugkarosserie 10 vollständig in das Behandlungsmedium 64 eingetaucht werden kann. Auf diese Weise können auch Fahrzeugkarosserien der Tauchvorbehandlung zugeführt werden, die vollständig aus Bauteilen aus einem Material gefertigt sind. Bei Fahrzeugkarosserien 10 mit mehreren Materialbezirken 12, 16 kann es gegebenenfalls notwendig sein, zunächst alle Bauteile unabhängig von ihrem Material im Tauchbad zu behandeln, um dann Bauteile in dem ersten oder zweiten Materialbezirk 12, 16 ergänzend in der Spritzzone 30 zu behandeln.

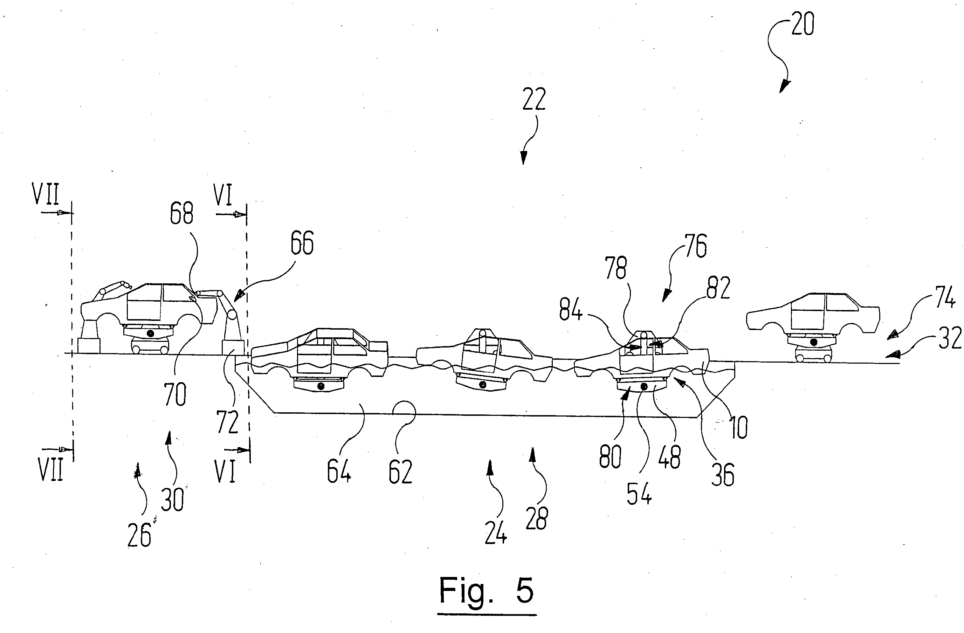

Die Figuren 5 bis 7 zeigen eine abgewandelte Vorbehandlungslinie 22, bei welcher funktional bereits erläuterte Komponenten dieselben Bezugzeichen tragen.

Das Fördersystem 32 ist hier nicht als Hängebahnsystem 34, sondern als Bodenbahnsystem 74 ausgebildet, bei denen die Transportwagen 36 auf dem Boden fahren und mehrere bodengeführte Förderwagenpaare 76 mit jeweils zwei Förderwagen 78 umfassen. Die beiden Förderwagen 78 eines Förderpaares 76 können jeweils recht bzw. links am Tauchbecken 62 entlang gefahren werden und spannen eine Trageinrichtung 80 für die Fahrzeugkarosserie 10 zwischen sich auf. Motoren und dergleichen an den Förderwagen 78 sind nicht eigens gezeigt.

Die Trageinrichtung 80 umfasst die Befestigungseinrichtung 48, wobei jeder Förderwagen 78 die Befestigungseinrichtung 48 über eine Hub-/Senkeinrichtung 82 lagert, die beim vorliegenden Ausführungsbeispiel wieder als Teleskopeinrichtung ausgebildet ist. Diese trägt jeweils das Bezugszeichen 84 und ist seitlich an die Befestigungseinrichtung 48 angelenkt.

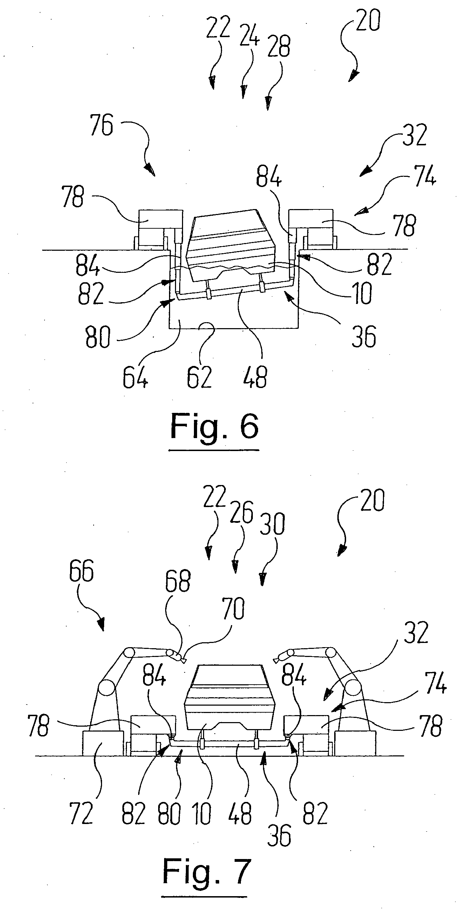

Die Bewegungsfreiheitsgrade der Fahrzeugkarosserie 10 sind dieselben wie bei dem Fördersystem 32 nach den Figuren 2 bis 4. Wie in Figur 6 zu erkennen ist, kann die Befestigungseinrichtung 48 und auf diesem Wege die Fahrzeugkarosserie 10 auch um die Kippachse 56 verkippt werden, indem die beiden Teleskopeinrichtungen 84 der Förderwagen 78 eines Förderpaares 76 unterschiedliche weit aus- bzw. eingefahren werden. Die Schwenkachse 54 wird bei der Kippbewegung wieder mitverkippt.

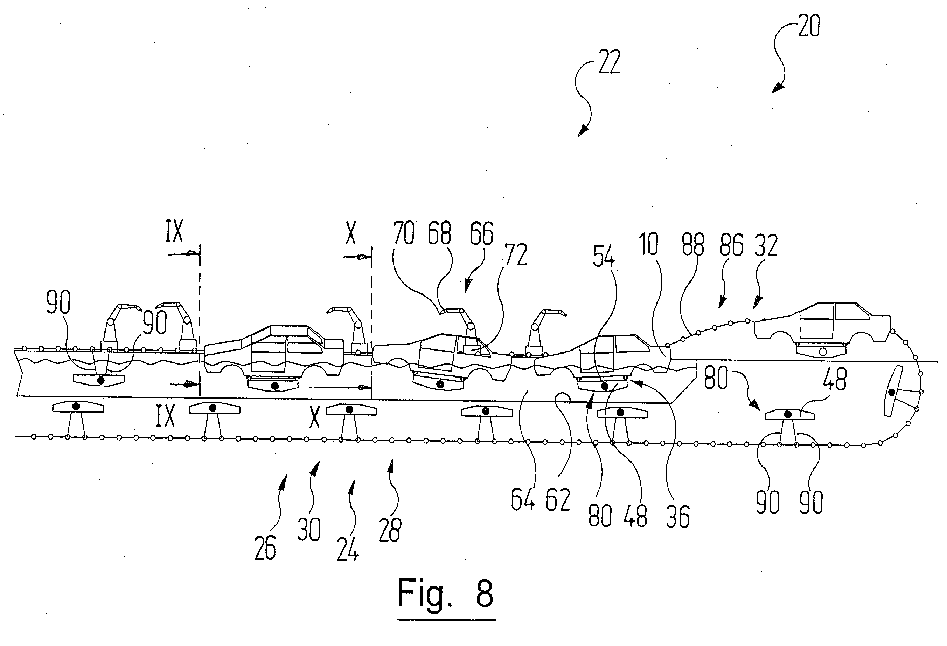

Die Figuren 8 bis 10 zeigen eine nochmals abgewandelte Vorbehandlungslinie 22, bei welcher bereits erläuterte Komponenten wieder dieselben Bezugzeichen tragen.

Alternativ zu dem Hängebahnsystem 34 und dem Bodenbahnsystem 74 ist das Fördersystem 32 hier als Kettenfördersystem 86 ausgebildet, bei dem rechts und links am Tauchbecken 62 entlang jeweils eine Förderkette 88 verläuft, die mehrere Trageinrichtungen 80 mit sich führen. Die Trageinrichtung 80 umfasst auch bei diesem Ausführungsbeispiel die Befestigungseinrichtung 48. An diese sind an beiden Seiten Verbindungstreben 90 angelenkt, die am gegenüberliegenden Ende starr mit der jeweils an der entsprechenden Seite verlaufenden Förderkette 88 verbunden sind.

Bei den in Figur 8 zu erkennenden Leertrums der Förderketten 88 stehen die Trageinrichtungen 80 auf Grund der starren Kopplung mit den Förderketten 88 jeweils über Kopf.

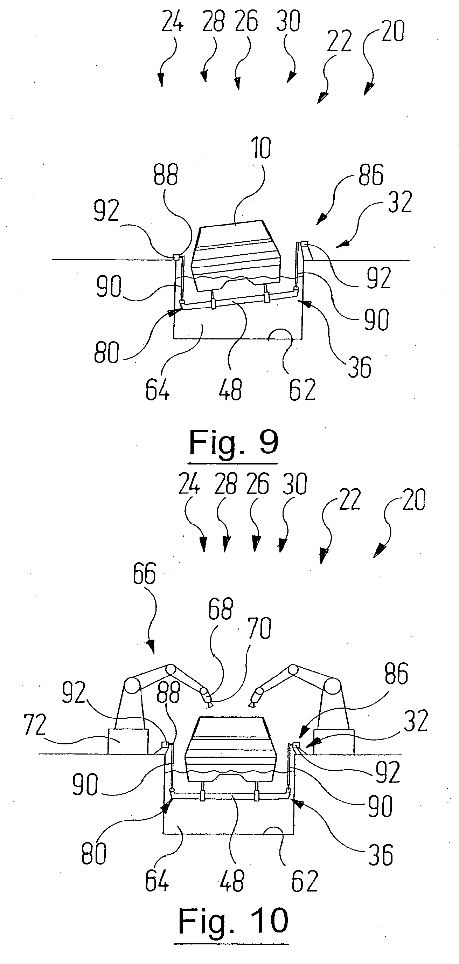

Die Bewegungsfreiheitsgrade der Fahrzeugkarosserie 10 sind wieder dieselben wie bei den Fördersystemen 32 nach den Figuren 2 bis 7. Eine Bewegung der Fahrzeugkarosserien 10 wird jedoch allein durch die Führung der Förderketten 88 bewirkt, die hierzu in jeweiligen Führungsprofilen 92 laufen, die in den Figuren 9 und 10 zu erkennen sind.

Um die Fahrzeugkarosserie 10 in vertikaler Richtung zu bewegen und in das Tauchbecken 62 hinein und wieder aus diesen heraus zu führen, wird das Höhenniveau der Förderketten 88 zu beiden Seiten des Tauchbeckens 62 verringert bzw. erhöht, wozu die Führungsprofile 92 einen entsprechenden Verlauf haben. Auf diese Weise bilden die Führungsprofile 92 eine Hub-/Senkeinrichtung. Eine Schwenkbewegung um die Schwenkachse 54 kann durch eine wellige Führung der Förderketten 88 erreicht werden. Ein Verkippen um die Kippachse 56 kann dadurch erzielt werden, dass die Förderketten 88 auf den gegenüberliegenden Seiten auf unterschiedlichen Höhenniveaus geführt werden, wie es in Figur 9 veranschaulicht ist.

Bei der Vorbehandlungslinie 22 nach den Figuren 8 bis 10 sind die erste und die zweite Behandlungszone 24, 26, d.h. die Tauchzone 28 und die Spritzzone 30, nicht in Förderrichtung separat hintereinander angeordnet, sondern überlappen in Förderrichtung. In diesem Fall sind die erste und die zweite Behandlungszone 24, 26 oder zumindest Abschnitte davon übereinander angeordnet. Die Applikationseinrichtungen 66 sind zu beiden Seiten des Tauchbeckens 62 angeordnet, so dass der erste Materialbezirk 12 einer Fahrzeugkarosserie 10 im Tauchbad 62 behandelt und zugleich das Behandlungsmedium auf den zweiten Materialbezirk 16 dieser Fahrzeugkarosserie 10 appliziert werden kann.

Dies ist in den Fällen möglich, in denen die Bauteile beider Materialbezirke 12, 16 mit dem gleichen Behandlungsmedium behandelt werden.

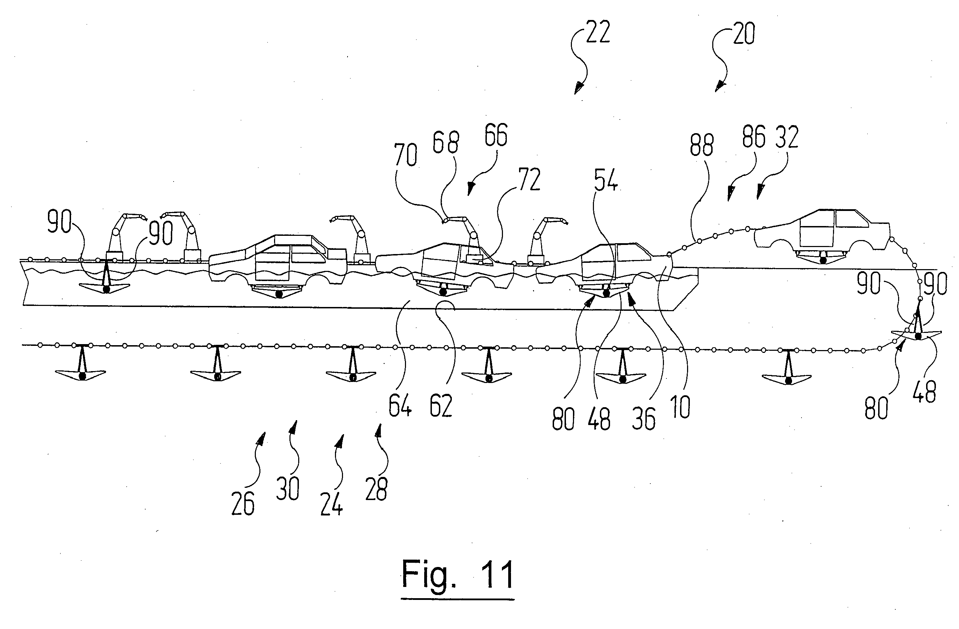

Figur 11 zeigt eine Vorbehandlungslinie 22 mit einer Abwandlung des Kettenfördersystems 86, wobei funktional bereits erläuterte Komponenten wieder dieselben Bezugszeichen tragen.

Dort sind die Verbindungsstreben 90 der Trageinrichtungen 80 an einem gemeinsamen Anlenkpunkt gelenkig mit den Förderketten 88 verbunden. Ein Verschwenken der Fahrzeugkarosserien 10 um die Schwenkachse 54 kann dort durch geeignete Kulissenführungen erreicht werden, die an den Verbindungsstreben 90 angreifen und im Einzelnen nicht eigens gezeigt sind.

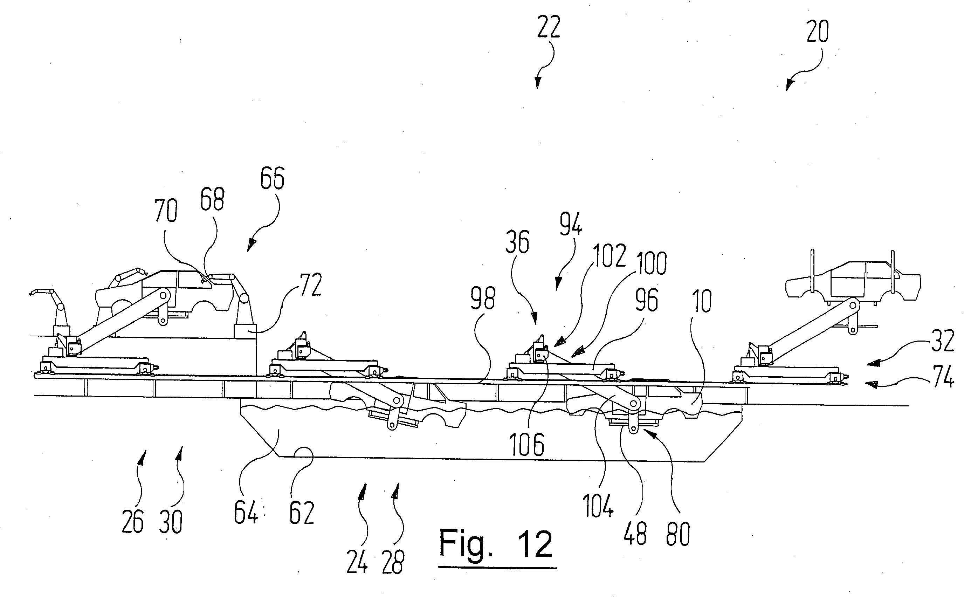

Figur 12 zeigt nochmals eine abgewandelte Vorbehandlungslinie 22, bei welcher die beiden Behandlungszonen 24 und 26, d.h. die Tauchzone 28 und die Spritzzone 30, wieder hintereinander angeordnet sind und bei welcher ein abgewandeltes Bodenbahnsystem 74 mit Transportwagen 36 eingesetzt wird.

Diese sind hier bodenschienengeführt und umfassen jeweils ein Tragwagenpaar 94 mit jeweils zwei schienengebundenen Tragwagen 96, die jeweils auf einer links und rechts des Tauchbeckens 62 verlaufenden Bodenschiene 98 fahren und die Trageinrichtung 80 zwischen sich aufspannen.

Die Trageinrichtung 80 umfasst eine Hub-/Senkeinrichtung 100, die hier als Schwenkeinrichtung 102 mit zwei Schwenkarme 104 ausgebildet ist, die an einem Ende gelenkig an jeweils einem Tragwagen 96 und am anderen Ende gelenkig an der Seite der Befestigungseinrichtung 48 befestigt sind. Über einen Antriebsmechanismus 106 kann eine Fahrzeugkarosserie 10 angehoben oder abgesenkt werden, indem die Schwenkarme 104 an den Tragwagen 96 verschwenkt werden. Der Antriebsmechanismus 106 wirkt auch auf die Befestigungseinrichtung 48, welche unabhängig von einer Bewegung der Schwenkarme 104 um die Schwenkachse 54 verschwenkt werden kann.

Ein Verkippen der Befestigungseinrichtung 48 um die Kippachse 56 kann dadurch erreicht werden, dass die beiden Schwenkarme 104 aus einer parallelen Stellung in eine nicht parallele Stellung bewegt werden.

## Patentansprüche

1. Verfahren zur Oberflächenbehandlung von Fahrzeugkarosserien (10), welche wenigstens einen ersten Materialbezirk (12), in dem die Fahrzeugkarosserien (10) aus Bauteilen aus einem ersten Material aufgebaut sind, und einen zweiten Materialbezirk (16) definieren, in dem die Fahrzeugkarosserien (10) aus Bauteilen aus einem zweiten Material aufgebaut sind,
**dadurch gekennzeichnet, dass**
der erste Materialbezirk (12) der Fahrzeugkarosserien (10) in einer ersten Behandlungszone auf eine erste Art und der zweite Materialbezirk (16) der Fahrzeugkarosserien (10) in einer zweiten Behandlungszone auf eine zweite Art behandelt wird.

2. Verfahren nach Anspruch 1, **dadurch gekennzeichnet, dass** bei der Behandlung der ersten Art eine Tauchbehändlung durchgeführt wird.

3. Verfahren nach Anspruch 1 oder 2, **dadurch gekennzeichnet, dass** bei der Behandlung der zweiten Art eine Spritzbehandlung durchgeführt wird.

4. Verfahren nach einem der Ansprüche 1 bis 3, **dadurch gekennzeichnet, dass** die Fahrzeugkarosserien (10) auf ein und demselben Fördersystem (32) sowohl durch die erste Behandlungszone als auch durch die zweite Behandlungszone gefördert werden.

5. Verfahren nach einem der Ansprüche 1 bis 4, **dadurch gekennzeichnet, dass** die Behandlungen der ersten Art und der zweiten Art Vorbehandlungen sind, welche die Fahrzeugkarosserien insbesondere vor einem Lackierprozess durchlaufen.

6. Anlage zur Oberflächenbehandlung von Fahrzeugkarosserien (10), welche wenigstens einen ersten Materialbezirk (12), in dem die Fahrzeugkarosserien (10) aus Bauteilen aus einem ersten Material aufgebaut sind, und einen zweiten Materialbezirk (16) definieren, in dem die Fahrzeugkarosserien (10) aus Bauteilen aus einem zweiten Material aufgebaut sind,
**dadurch gekennzeichnet, dass**
a) erste Mittel (66) vorhanden sind, durch welche der erste Materialbezirk (12) der Fahrzeugkarosserien (10) in einer ersten Behandlungszone auf eine erste Art behandelbar ist;
b) zweite Mittel (66) vorhanden sind, durch welche der zweite Materialbezirk (16) der Fahrzeugkarosserien (10) in einer zweiten Behandlungszone auf eine zweite Art behandelbar ist.

7. Anlage nach Anspruch 6, **dadurch gekennzeichnet, dass** in der ersten Behandlungszone ein Tauchbecken (62) angeordnet ist, welches mit einem Behandlungsmedium (64) gefüllt ist, und die Behandlung der ersten Art eine Tauchbehandlung ist.

8. Anlage nach Anspruch 6 oder 7, **dadurch gekennzeichnet, dass** in der zweiten Behandlungszone wenigstens eine Applikationseinrichtung (66) angeordnet ist, mittels welcher ein Behandlungsmedium (70) auf die Fahrzeugkarosserie (10) abgebbar ist, und die Behandlung der zweiten Art eine Spritzbehandlung ist.

9. Anlage nach einem der Ansprüche 6 bis 8, **dadurch gekennzeichnet, dass** die Fahrzeugkarosserien (10) mit einem Fördersystem (32) sowohl durch die erste Behandlungszone als auch durch die zweite Behandlungszone förderbar sind.

10. Anlage nach Anspruch 9, **dadurch gekennzeichnet, dass** das Fördersystem (32) eine Vielzahl von Transportwagen (36) mit einer Befestigungseinrichtung (48) umfasst, an welcher eine Fahrzeugkarosserie (10) befestigbar ist.

11. Anlage nach Anspruch 10, **dadurch gekennzeichnet, dass** die Transportwagen (36) eine Hub-/Senkeinrichtung (50; 82; 92; 100) umfassen, durch welche die Befestigungseinrichtung (48) in vertikaler Richtung anhebbar oder absenkbar ist.

12. Anlage nach Anspruch 10 oder 11, **dadurch gekennzeichnet, dass** das Fördersystem (32) ein Hängebahnsystem (34) ist, bei dem die Transportwagen (36) auf einer Tragschiene (38) verfahrbar sind.

13. Anlage nach Anspruch 12, **dadurch gekennzeichnet, dass** die Hub-/Senkeinrichtung (50) als Teleskopeinrichtung (52) ausgebildet ist.

14. Anlage nach Anspruch 10 oder 11, **dadurch gekennzeichnet, dass** das Fördersystem (32) ein Bodenbahnsystem (74) ist, bei welchem die Transportwagen (36) als Förderwagenpaar (76) mit zwei Förderwagen (78), die auf einem Boden verfahrbar sind, oder als Tragwagenpaar (94) mit zwei Tragwagen (96), welche auf einer Bodenschiene (98) verfahrbar sind, ausgebildet sind, die eine Tragstruktur (80) mit der Befestigungseinrichtung (48) zwischen sich aufspannen.

15. Anlage nach Anspruch 14, **dadurch gekennzeichnet, dass** die Hub-/Senkeinrichtung (82; 100) als Teleskopeinrichtung (84) oder als Schwenkeinrichtung (102) ausgebildet ist.

16. Anlage nach Anspruch 10 oder 11, **dadurch gekennzeichnet, dass** das Fördersystem (32) ein Kettenfördersystem (86) mit wenigstens einer Förderkette (88) ist, welche die Transportwagen (36) mit sich führt.

17. Anlage nach Anspruch 16, **dadurch gekennzeichnet, dass** das die Hub-/Senkeinrichtung (92) durch wenigstens ein Führungsprofil ausgebildet ist, welches die Förderkette (88) führt und auf unterschiedlichen Höhenniveaus verläuft.

18. Anlage nach einem der Ansprüche 6 bis 17, **dadurch gekennzeichnet, dass** die erste Behandlungszone und die zweite Behandlungszone jeweils Vorbehandlungszonen (24, 26) sind, in denen die Fahrzeugkarosserien (10) insbesondere vor einem Lackierprozess vorbehandelbar sind.
